(19) Europäisches Patentamt
European Patent Office
Office européen des brevets

(11) Publication number : **0 410 463 B1**

(12) # EUROPEAN PATENT SPECIFICATION

(45) Date of publication of patent specification : **05.10.94 Bulletin 94/40**

(51) Int. Cl.$^5$ : **H02M 5/458**

(21) Application number : **90114388.3**

(22) Date of filing : **26.07.90**

(54) **Voltage-type PWM converter/inverter system and method of controlling the same.**

(30) Priority : **27.07.89 JP 194498/89**
**22.06.90 JP 165047/90**

(43) Date of publication of application : **30.01.91 Bulletin 91/05**

(45) Publication of the grant of the patent : **05.10.94 Bulletin 94/40**

(84) Designated Contracting States : **DE FR GB**

(56) References cited :
**EP-A- 0 231 023**
**GB-A- 2 136 168**
**US-A- 4 620 296**

(73) Proprietor : **SEIKO EPSON CORPORATION**
**4-1, Nishishinjuku 2-chome**
**Shinjuku-ku Tokyo-to (JP)**

(72) Inventor : **Akagi, Yasufumi**
**Nagaoka Jutaku 5-103,**
**1-3-4, Gakkocho**
**Nagoaka-Shi, Niigata-shi (JP)**
Inventor : **Ito, Norito**
**c/o Seiko Epson Corporation,**
**3-5, Owa 3-chome**
**Suwa-shi, Nagano-ken (JP)**
Inventor : **Shimoda, Tatsuya**
**c/o Seiko Epson Corporation,**
**3-5, Owa 3-chome**
**Suwa-shi, Nagano-ken (JP)**

(74) Representative : **Hoffmann, Eckart et al**
**Patentanwalt,**
**Blumbach & Partner,**
**Bahnhofstrasse 103**
**D-82166 Gräfelfing (DE)**

**EP 0 410 463 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a voltage PWM converter/inverter system for changing an AC input of a first frequency to an AC output of a second frequency and a method of controlling the same.

Generally the converter/inverter system is for converting an alternating-current (commercial power) to a direct-current by a converter. The direct-current is smoothed by a smoothing circuit comprising a capacitor, etc. and then converted to an alternating-current of a variable frequency by an inverter. The PWM (Pulse Width Modulation) is one of the processes for controlling such a system. In the sine wave PWM controlling process for frequency conversion, a converter and a direct-current capacitor for smoothing generate from an alternating-current of a sine waveform a direct-current of a constant voltage, i.e., a direct-current power, to supply the same to an inverter. The inverter chops the same to change the frequency, while controlling the pulse width unequidistantly, whereby a power equal to the alternating-current power of the sine waveform is obtained.

For controlling the direct-current capacitor voltage of a voltage PWM converter/inverter system, i.e., a terminal voltage of the smoothing capacitor, to be constant, the so-called feedback control has conventionally been used in which the direct-current capacitor voltage is detected, and its detected value is compared with a command value to control the inverter. This control process is described in, e.g., Proceedings of (IPEC - Tokyo '83) organized by the Institute of Electrical Engineers, April, 1983, ps. 720 - 731, etc.

But this conventional controlling process has a disadvantage in that it is difficult to control the direct-current capacitor voltage (the voltage of the smoothing capacitor) to be constant at a so-called transient stage, e.g., when a speed command of a load motor is abruptly changed, or a load torque has been abruptly changed. Specifically there is a danger that when power is regenerated, or when a load torque abruptly decreases, the direct-current capacitor voltage rises, with an adverse result that switching devices used in the converter and the inverter are broken.

In the conventional controlling process, the feedback control is based on detection of only a change of the terminal voltage of the direct-current capacitor, and accordingly a detection delay is a disadvantage. To control the direct-current capacitor voltage to be constant when a load abruptly changes, it is necessary to set a large proportional gain $K_p$ and integral gain $K_i$ of a PI (Proportional Integral) controller used in the feedback control system. But large gains $K_p$, $K_i$ often make the control system unstable, so that in view of the stability the gains $K_p$, $K_i$ cannot be made too large.

A first object of this invention is to provide a voltage-type PWM converter/inverter system which can control stably at high speed a direct-current capacitor terminal voltage of the smoothing capacitor.

A second object of this invention is to provide a method of controlling the above-described system which can control the direct-current capacitor terminal voltage stably at high speed.

These objects are achieved with a converter/inverter system and a method of controlling it according to claims 1 and 7, respectively.

Specific embodiments of the invention are subject-matter of the dependent claims.

According to the invention instantaneous power calculating means is provided for calculating an instantaneous power value based on measured electric values belonging to the inverter. The converter control means is adapted for voltage PWM-controlling the converter means, based on a set converter command value, a terminal direct-current voltage value of the smoothing means and the instantaneous real power calculated value.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

## Brief Description of the Drawings

- Fig. 1 is a block diagram of the overall system according to one embodiment of this invention:
- Fig. 2 is a block diagram of one embodiment of the instantaneous real power calculating circuit which is a major part of the system according to the embodiment;
- Fig. 3 is a block diagram detailing the embodiment of the instantaneous real power calculating circuit;
- Fig. 4 is a block diagram of the system according to another embodiment for explaining the process for controlling the system;

| | |
|---|---|
| Fig. 5 | is a block diagram of another embodiment of the instantaneous real power calculating circuit; |
| Fig. 6 | is a block diagram of an experimental system for testing the effect of this invention; |
| Fig. 7 | are waveforms showing the steady characteristic obtained by the experiment; |
| Fig. 8 | is a voltage waveform and a current waveform between the terminals of the direct-current capacitor; and |
| Figs. 9 and 10 | are waveforms showing transient responses of the respective parts. |

## Description of the Preferred Embodiment

As shown in Fig. 1, the basic part of the system according to one embodiment of this invention comprises an alternating-current power source 10, a converter 20 which rectifies a three-phase alternating power supplied by the alternating-current source 10, and an inverter 30 which generates an alternating power from the rectified direct-current power in accordance with a required rotation angular speed of a permanent-magnet synchronous motor (PM) 40. A reactor 50 which removes a higher harmonic component is inserted between the alternating-current power source 10 and the converter 20, and between the converter 20 and the inverter 30, a capacitor 60 (direct-current capacitor) for smoothing is inserted. The main circuits of the converter 20 and of the inverter 30 are of the same three-phase bridge connection as the conventional ones and use IGBT modules as the power elements. The load of the inverter 30 is the motor (PM) 40. It is possible to use an induction motor or other alternating-current motors, and in this case, the control systems for the converter 20 and the inverter 30 are not completely the same but have the same basic circuit structure.

The control system of the converter 20 basically comprises the following devices. That is, it comprises: a PI controller 21 which compares a terminal voltage (a direct-current capacitor voltage $V_{cd1}$) of the smoothing capacitor 60 with its command value $V_{cd2}$ and, based on the comparison result, outputs a P signal; a reference current calculating circuit 22 which calculates reference currents $i_{r2}$, $i_{s2}$, $i_{t2}$ based on detected values $V_{r1}$, $V_{s1}$, $V_{t1}$ of three-phase input voltages to the converter 20 and the P signal from the PI controller 21; a reference voltage calculating circuit 23 which calculates reference voltages $V_{r2}$, $V_{s2}$, $V_{t2}$ based on the reference currents $i_{r2}$, $i_{s2}$, $i_{t2}$, the detected values $i_{r1}$, $i_{s1}$, $i_{t1}$ of three-phase input currents to the converter 20 and the above-described detected values $V_{r1}$, $V_{s1}$, $V_{t1}$; and a PWM circuit 24 which PWM controls the converter 20, based on the above-described reference values $V_{r2}$, $V_{s2}$, $V_{t2}$ and a triangular wave carrier. The above-described detected values $V_{r1}$, $V_{s1}$, $V_{t1}$ are provided by a voltage detector 25. The detected values $i_{r1}$, $i_{s1}$, $i_{t1}$ are provided by a current detector 26. In this embodiment, the reference current calculating circuit 22 is supplied with a signal totaling the P signal from the PI controller 21 and a signal $P_d$ from an instantaneous real power calculating circuit 70. This is related to a characteristic of this invention which will be elaborated later. This explanation will be continued on the assumption that the signal $P_d$ is not added to the P signal.

The converter 20 and its control system operate as follows.

The detected value $V_{cd1}$ of the terminal voltage of the smoothing capacitor 60 and a command value $V_{cd2}$ of the direct-current capacitor voltage are compared, and a P signal is obtained through the PI controller 21. The PI controller 21 computes Formula (1).

$$P = K_p * (V_{cd2} - V_{cd1}) + K_i * \int (V_{cd2} - V_{cd1})\, dt \quad (1)$$

where $K_p$ is a proportional gain, and $K_i$ is an integral gain.

This P signal is an instantaneous real power obtained by feeding back the direct-current capacitor voltage of the smoothing capacitor 60, and the instantaneous real power is supplied to the reference current calculating circuit 22. This circuit 22 calculates Formula (2)

$$\begin{bmatrix} i_{r2} \\ i_{s2} \\ i_{t2} \end{bmatrix} = \sqrt{2/3} \begin{bmatrix} 1 & 0 \\ -1/2 & \sqrt{3}/2 \\ -1/2 & -\sqrt{3}/2 \end{bmatrix} \begin{bmatrix} V_\alpha & V_\beta \\ -V_\beta & V_\alpha \end{bmatrix}^{-1} * \begin{bmatrix} P \\ 0 \end{bmatrix} \quad \ldots\ldots (2)$$

with

$$\begin{bmatrix} V_\alpha \\ V_\beta \end{bmatrix} = \sqrt{2/3} \begin{bmatrix} 1 & -1/2 & -1/2 \\ 0 & \sqrt{3}/2 & -\sqrt{3}/2 \end{bmatrix} \begin{bmatrix} V_{r1} \\ V_{s1} \\ V_{t1} \end{bmatrix}$$

where $V_{r1}$, $V_{s1}$ and $V_{t1}$ are three-phase input voltages to the converter.

The reference currents $i_{r2}$, $i_{s2}$, $i_{t2}$ obtained by the reference current calculating circuit 22 are supplied to the reference voltage calculating circuit 23. The reference voltage calculating circuit 23 calculates reference voltages $V_{r2}$, $V_{s2}$, $V_{t2}$ for the PWM control by the PWM circuit 24 by the following Formulas (3), (4) and (5)

$$V_{r2} = K * (i_{r2} - i_{r1}) + V_{r1} \quad (3)$$

$$V_{s2} = K * (i_{s2} - i_{s1}) + V_{s1} \quad (4)$$

$$V_{t2} = K * (i_{t2} - i_{t1}) + V_{t1} \quad (5)$$

Here the PWM circuit 24 uses the triangular wave comparison method.

The control system for the inverter 30 basically comprises the followings devices. That is: a PI controller 31 which compares an angular speed signal $W_{m1}$ of the load motor 40 with its command value $W_{m2}$ and, based on the comparison result, outputs a torque current reference value $i_{q2}$, a reference current calculating circuit 32 which outputs reference currents $i_{u2}$, $i_{v2}$, $i_{w2}$ based on the above-described reference value $i_{q2}$ and a rotor position signal $\Theta_m$ of the motor; a reference voltage calculating circuit 33 which outputs reference votages $V_{u2}$, $V_{v2}$, $V_{w2}$ based on the above-described reference currents $i_{u2}$, $i_{v2}$, $i_{w2}$, counter electromotive force estimated values $e_u$, $e_v$, $e_w$ and detected values $i_{u1}$, $i_{v1}$ $i_{w1}$ of output currents of the inverter 30; and a PWM circuit 34 which PWM controls the inverter 30, based on the reference values $V_{u2}$, $V_{v2}$, $V_{w2}$. The above-described angular speed signal $W_{m1}$ is produced by a speed sensor (TG) 42 set in a position sensor (PS) 41 for the motor 40, and the rotor position signal $\Theta_m$ is produced by the position sensor 41. The above-described estimated values $e_u$, $e_v$, $e_w$ are supplied by a counter electromotive force estimating circuit 43 based on the angular speed signal $W_{m1}$ and the rotor position signal $\Theta_m$. The above-described detected values $i_{u1}$, $i_{v1}$, $i_{w1}$ are supplied by a current detector 44.

The operation of the inverter 30 and its control system is as follows.

The PI controller 31 compares the angular speed signal $W_{m1}$ of the motor 40 detected by the speed sensor 42 with the speed command value $W_{m2}$ to produce the torque current reference value $i_{q2}$ for agreeing the angular speed signal $W_{m1}$ with the speed command value $W_{m2}$. The PI controller 31 calculates the following Formula (6)

$$i_{q2} = K_p * (W_{m2} - W_{m1}) + K_i * \int (W_{m2} - W_{m1})\, dt \quad (6)$$

where $K_p$ is a proportional gain, and $K_i$ is an integral gain.

The reference current calculating circuit 32 is supplied with the torque current reference value $i_{q2}$ and the rotor position signal $\Theta_m$, and calculates the following Formulas (7), (8) and (9) to give three-phase reference current values $i_{u2}$, $i_{v2}$, $i_{w2}$

$$i_{u2} = \sqrt{2/3} * i_{q2} * \cos\Theta_m \quad (7)$$

$$i_{v2} = \sqrt{2/3} * i_{q2} * \cos(\Theta_m - 2\pi/3) \quad (8)$$

$$i_{w2} = \sqrt{2/3} * i_{q2} * \cos(\Theta_m + 2\pi/3) \quad (9)$$

The reference voltage calculating circuit 33 calculates reference voltage values $V_{u2}$, $V_{v2}$, $V_{w2}$ by the following Formulas (10), (11) and (12) for the PWM control by the PWM circuit 34

$$V_{u2} = K_1 * (i_{u2} - i_u) + e_u \quad (10)$$

$$V_{v2} = K_1 * (i_{v2} - i_v) + e_v \quad (11)$$

$$V_{w2} = K_1 * (i_{w2} - i_w) + e_w \quad (12)$$

where $K_1$ is a gain.

The counter electromotive force estimated values $e_u$, $e_v$, $e_w$ are calculated based on the rotor position signal $\Theta_m$ and the angular speed signal $W_{m1}$ by the following Formulas (13), (14) and (15)

$$e_u = K_2 * W_{m1} * \cos\Theta_m \quad (13)$$

$$e_v = K_2 * W_{m1} * \cos(\Theta_m - 2\pi/3) \quad (14)$$

$$e_w = K_2 * W_{m1} * \cos(\Theta_m + 2\pi/3) \quad (15)$$

where $K_2$ is a constant determined by the motor. The three-phase reference voltage values $V_{u2}$, $V_{v2}$, $V_{w2}$ are used for the PWM control by the PWM circuit 34 using triangular waves for the comparison, and the motor 40

is supplied with a sine wave current.

An instantaneous real power calculating circuit 70 which is a point of this invention is supplied, as shown in Fig. 1, with the reference values $V_{u2}$, $V_{v2}$, $V_{w2}$ by the reference voltage calculating circuit 33 belonging to the inverter 30, while supplied with the motor currents $i_{u1}$, $i_{v1}$, $i_{1w}$ by the current detector 44. Then the instantaneous real power calculating circuit 70 calculates an instantaneous real power calculated value $P_d$ based on the reference voltage values and the motor current values to feed the same back to the control system of the converter 20. That is, the instantaneous real power P (the output of the PI controller 21) given by feeding back the direct-current capacitor voltage of the smoothing capacitor 60, and the load instantaneous real power $P_d$ (the computed output of the instantaneous real power calculating circuit 70) are combined to input the calculated output $P_d$ to the reference current calculating circuit 22 for the use in controlling the converter 20. It is needless to say that the above-described instantaneous real power is based on the so-called effective voltage. The above-described instantaneous real power calculating circuit 70 basically comprises, as shown in Fig. 2, integrators 71, 72, 73, and an adder 74 for adding the outputs of the integrators, and the instantaneous real power $P_d$ is calculated based on the outputs $V_{u2}$, $V_{v2}$, $V_{w2}$ and the motor currents $i_{u1}$, $i_{v1}$, $i_{w1}$ by the following Formula (16)

$$P_d = V_{u2} * i_{u1} + V_{v2} * i_{v1} + V_{w2} * i_{w1} \quad (16)$$

The basic structure of Fig. 2 of the instantaneous real power calculating circuit 70 can be exemplified by Fig. 3. As shown in Fig. 3, multipliers 701, 702, 703 replace the integrators 71, 72, 73 in Fig. 2, and an assembly of an operational amplifier 704 takes the place of the adder 74 in Fig. 2. This instantaneous real power calculating circuit 70 as well conducts the calculation using Formula (16).

The calculated instantaneous real power value $P_d$ is added to the signal P from the PI controller 21 to conduct the calculation by the reference current calculating circuit 22 using the following reference Formula (17)

$$\begin{bmatrix} i_{r2} \\ i_{s2} \\ i_{t2} \end{bmatrix} = \sqrt{2/3} \begin{bmatrix} 1 & 0 \\ -1/2 & \sqrt{3}/2 \\ -1/2 & -\sqrt{3}/2 \end{bmatrix} \begin{bmatrix} V_\alpha & V_\beta \\ -V_\beta & V_\alpha \end{bmatrix}^{-1} * \begin{bmatrix} P + P_d \\ 0 \end{bmatrix} \quad \ldots\ldots (17)$$

with

$$\begin{bmatrix} V_\alpha \\ V_\beta \end{bmatrix} = \sqrt{2/3} \begin{bmatrix} 1 & -1/2 & -1/2 \\ 0 & \sqrt{3}/2 & -\sqrt{3}/2 \end{bmatrix} \begin{bmatrix} V_{r1} \\ V_{s1} \\ V_{t1} \end{bmatrix}$$

where $V_{r1}$, $V_{s1}$ and $V_{t1}$ are three-phase input voltages to the converter.

The difference between Formula (17) and the above-described Formula (2) is that the former contains the instantaneous real power calculated output $P_d$. Thus the inverter side and the converter side can be balanced with respect to the instantaneous real power, which can solve the problem of the conventional method. That is, even when the gains $K_p$, $K_i$ in Formula (1) are made small, an instantaneous real power belonging to the inverter 30 is detected without a time lag to be supplied to the reference current calculating circuit 22 belonging to the converter 20, and accordingly the direct-current capacitor voltage of the smoothing capacitor 60 can be controlled stably at high speed.

The signal to be supplied to the instantaneous real power calculating circuit 70 for the calculation of the signal $P_d$ is not limited to that of the above-described embodiment, and various signals can be used. That is, because the signal may well be a basis for calculating the instantaneous real power $P_d$ belonging to the inverter, the signal can be exemplified by the following ones. This will be explained with reference to Fig. 4.

The above-described embodiment is the case in which the signals indicated by (a) and (b) in Fig. 4, i.e.,

the reference voltages $V_{u2}$, $V_{v2}$, $V_{w2}$ and the motor current values $i_{u1}$, $i_{v1}$, $i_{w1}$ are used to calculate the instantaneous power $P_d$, and the calculating formula is Formula (16). Using signals indicated by (a) and (c) in Fig. 4, the instantaneous real power $P_d$ can be calculated by the following Formula (18)

$$P_d = V_{u2} * i_{u2} + V_{v2} * i_{v2} + V_{w2} * i_{w2} \quad (18)$$

where $i_{u2}$, $i_{v2}$, $i_{w2}$ are reference currents of the control system of the inverter.

It is also possible to calculate the instantaneous real power $P_d$ using signals (d) and (e) in Fig. 4, i.e., a torque current reference value $i_{q2}$, the output of the PI controller 31 belonging to the inverter 30, and the motor angular speed signal $W_{m1}$

$$P_d = PM * W_{m1} * i_{q2} \quad (19)$$

where PM is a motor constant. Fig. 5 shows a major part of the system according to an embodiment in which Formula (19) is used by the instantaneous real power calculating circuit. As shown by Formula (19), the motor angular speed $W_{m1}$ and the torque reference current $i_{q2}$ are inputted to the instantaneous real power calculating circuit 32 to control the system.

Using signals (f) and (g) in Fig. 4, i.e., the direct-current voltage value $V_{cd1}$ and the input current id to the inverter 30, the instantaneous real power $P_d$ can be calculated by the following Formula (20)

$$P_d = V_{cd1} * i_d \quad (20)$$

It is also possible to calculate the instantaneous real power $P_d$ using the following Formulas (21) and (22). That is

$$P_d = V_{u1} * i_{u1} + V_{v1} * i_{v1} + V_{w1} * i_{w1} \quad (21)$$

using the motor currents $i_{u1}$, $i_{v1}$, $i_{w1}$ and the motor voltages $V_{u1}$, $V_{v1}$, $V_{w1}$,
or

$$P_d = V_{u1} * i_{u2} + V_{v1} * i_{v2} + V_{w1} * i_{w2} \quad (22)$$

using signals (c) and (h) in Fig. 4.

In this embodiment, the PWM circuits 24, 34 in Fig. 1 use the triangular wave comparison method, but they may use other methods, e.g., the instantaneous value comparison method. Without the counter electromotive force estimating circuit described in Fig. 1, the system has the same structure, but it is necessary to increase the gain $K_1$ in Formulas (10), (11) and (12). But it is preferable that the gain $K_1$ is smaller from the viewpoint of the stability, and here the counter electromotive force estimated values $e_u$, $e_v$, $e_w$ are supplied to the reference voltage calculating circuit 33. The power devices for the converter 20 and the inverter 30 are not necessarily IGBT modules and may be any switch devices, e.g., bipolar transistors, MOSFETs, GTOs, SITs, thyristors or others. The instantaneous real power calculating circuit and the counter electromotive force estimating circuit may be of other types as long as they have the same basic ideas.

For testing the effect of this invention, Fig. 6 shows a circuit using a forward resistance 81 in place of the inverter and the motor (load). The reactors $50_r$, $50_s$, $50_t$ have 0.75 mH, the smoothing capacitor 60 has a capacity of 20 μF, and the carrier frequency of the triangular wave supplied to the PWM circuit 24 is 10 kHz. The terminal voltage of the load, i.e., of the forward resistance 81, is the direct-current capacitor voltage $V_{cd1}$, and the current flowing through the resistance 81 is the current $i_d$, and their product is the instantaneous real power calculated value $P_d$. Fig. 7 shows the steady characteristic of the case in which the command value $V_{cd2}$ of the direct-current capacitor voltage is 200 V constant, and the consumed power of the load is 2.4 kW. The respective curves indicate from the top the capacitor voltage $V_{cd1}$, the U-phase current phase $i_{u2}$ and the U-phase input current $i_{u1}$. It is to be seen from Fig. 7 that the actual input current accurately follows the reference current.

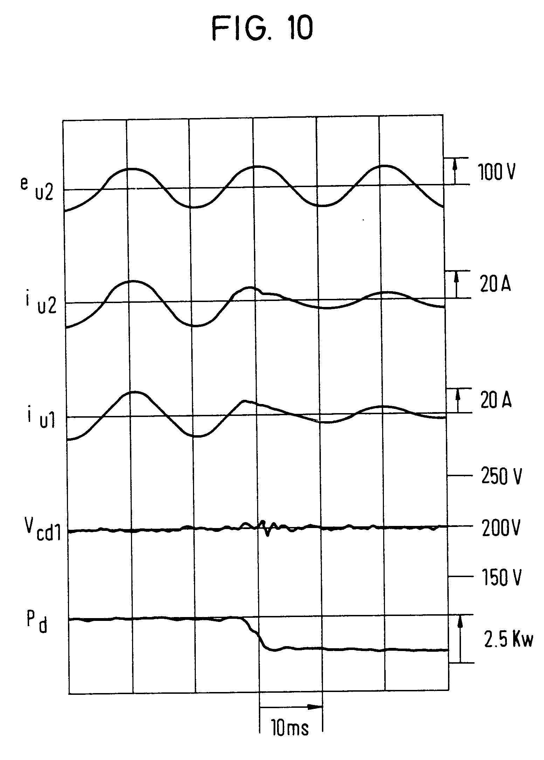

Fig. 8 shows the voltage waveform and the current waveform of the direct-current capacitor at this time. Figs. 9 and 10 show the transient response in the case in which with the capacitor voltage command value $V_{cd2}$ set at 200 V constant, the consumed power of the load is abruptly varied between 0.8 kW and 2.4 kW. Fig. 9 shows waveforms for the case in which the consumed power is increased from 0.8 kW to 2.4 kW with the load increased. Fig. 10 shows waveforms for the case in which the consumed power is decreased from 2.4 kW to 0,8 kW with the load decreased. The respective waveforms indicate from the top the U-phase voltage $e_{u2}$, the U-phase reference current $i_{u2}$, the U-phase input current $i_{u1}$, the capacitor voltage $V_{cd1}$ and the load power $P_d$. As shown in Fig. 9, with a quick load change of less than 1 ms, the voltage change of a maximum of 50 V occurs because of the delay of the control system. In contrast to this, the voltage change with the load change of around 3 ms is suppressed as low as around 15 V. This is the result of the experiment in which the resistance is used as the load, but the same effect can be expected in the experiment in which the load is the motor.

The system according to this invention has been explained by embodiments which use motors as the loads. The system according to this invention uses a three-phase commercial power source and is applicable to machines and instruments with the motors electrically driven at variable speeds, e.g., various motors for house equipment machines and instruments, power motors for factory automation (FA) machines and instruments, power motors for mobile bodies, and any other fields. The load may not be motors but high-frequency furnaces

using coils alone. This invention is applicable as it is to frequency converters for converting commercial frequencies.

In this invention, an instantaneous real power belonging to the inverter is calculated, and the computed result is fed back to the control system of the converter. This enables the inverter and the converter to be balanced in the instantaneous real power, and resultantly the abrupt rise in the direct-current capacitor voltage in the transient state is prevented. Consequently the advantageous effect that the control of the capacitor voltage which is stable and has transient characteristics can be realized. That is, this invention has successfully overcome the conventional problems of breakage, etc. of the capacitor which take place when a load varies. Consequently the products using this invention have much improved reliability. In addition, with the capacity of the smoothing direct-current capacitor unchanged, the control systems are stable even with the $K_i$, $K_p$ for the control of the PI increased. Consequently the method of PI control can be designed easily. On the other hand, with the gains $K_i$, $K_p$ kept constant, the capacity value of the smoothing capacitor can be greatly decreased, which much contributes to miniaturization of the products using this invention.

## Claims

1. A voltage PWM converter/inverter system comprising:

   converter means (20) for converting an input AC power into DC power;

   inverter means (30) for converting said DC power into an output AC power;

   smoothing means (60) inserted between the converter means and the inverter means;

   converter control means (24) for voltage PWM-controlling the converter means (20), based on a plurality of inputs including a converter command value and a detected value of the terminal voltage of the smoothing means (60); and

   inverter control means (34) for voltage PWM-controlling the inverter means (30), based on an inverter command value and said output AC power,

   *characterized by*

   instantaneous power calculating means (70) for calculating, based on measured electric values belonging to the inverter means (39), an instantaneous power calculated value which is supplied to said converter control means (24) as a further input.

2. The system according to claim 1, wherein the instantaneous power calculating means (70) outputs said instantaneous power calculated value based on a detected value or a command value of the output voltage of the inverter means (30), and a detected value or a command value of the output current of the inverter means.

3. The system according to claim 1, wherein the instantaneous power calculating means (70) outputs the instantaneous power calculated value based on a detected value or a command value of the output voltage of the inverter means (30), and a detected value or a command value of the input current to the inverter means.

4. The system according to claim 1, wherein the instantaneous power calculating means (70) outputs the instantaneous power calculated value based on a detected value or a command value of the input voltage to the inverter means (30), and a detected value or a command value of the output current of the inverter means.

5. The system according to claim 1, wherein the instantaneous power calculating means (70) outputs the instantaneous power calculated value based on a detected value or a command value of the input voltage to the inverter means (30), and a detected value or a command value of the input current to the inverter means.

6. The system according to any one of claims 2 to 5, wherein the converter control means (21, 23, 24) comprises first means (21) for giving an instantaneous power value, based on a command value and a detected value of the DC voltage applied to the terminals of the smoothing means (60); second means for adding the instantaneous power value and said instantaneous power calculated value; and third means (23, 24) for controlling the converter means (20), based on the addition result supplied by the second means, and detected values of the input voltage and the input current to the converter means.

7. A method of controlling a voltage PWM converter/inverter system in which the frequency of an input AC

can be converted into a different frequency for output, and a terminal voltage of smoothing means (60) inserted between a converter (20) and an inverter (30) is detected and fed back to a control system of the converter, the method being characterized by

calculating an instantaneous power from measured electric values belonging to the inverter (30), and feeding back the calculated output as an instantaneous power calculated value to the control system of the converter.

8. The method according to claim 7, wherein the instantaneous power calculated value is calculated based on a detected value or a command value of the output voltage of the inverter, and a detected value or a command value of the output current of the inverter (30).

9. The method according to claim 7, wherein the instantaneous power calculated value is calculated based on a detected value or a command value of the output voltage of the inverter, and a detected value or a command value of the input current to the inverter (30).

10. The method according to claim 7, wherein the instantaneous power calculated value is calculated based on a detected value or a command value of the input voltage to the inverter, and a detected value or a command value of the output current of the inverter (30).

11. The method according to claim 7, wherein the instantaneous power calculated value is calculated based on a detected value or a command value of the input voltage to the inverter, and a detected value or a command value of the input current to the inverter (30).

## Patentansprüche

1. Spannungs-PBM-Stromrichter/Wechselrichtersystem, umfassend:

eine Stromrichtereinrichtung (20) zur Umformung einer Eingangswechselstromleistung in eine Gleichstromleistung;

eine Wechselrichtereinrichtung (30) zur Umformung der Gleichstromleistung in eine Ausgangswechselstromleistung;

eine Glättungseinrichtung (60), die zwischen die Stromrichtereinrichtung und die Wechselrichtereinrichtung gesetzt ist;

eine Stromrichtersteuereinrichtung (24) für die Spannungs-PBM-Steuerung der Stromrichtereinrichtung auf der Basis einer Vielzahl von Eingangssignalen einschließlich eines Stromrichtersollwerts und eines Istwerts der Klemmenspannung der Glättungseinrichtung (60);

und eine Wechselrichtersteuereinrichtung (34) für die Spannungs-PBM-Steuerung der Wechselrichtereinrichtung (30) auf der Basis eines Wechselrichtersollwerts und der Ausgangswechselstromleistung,

**gekennzeichnet** durch

eine Momentanleistungsberechnungseinrichtung (70) zur Berechnung, auf der Basis gemessener elektrischer Werte, die zu der Wechselrichtereinrichtung (39) gehören, eines berechneten Werts der Momentanleistung, der der Stromrichtersteuereinrichtungen (24) als weiteres Eingangssignal zugeführt wird.

2. System nach Anspruch 1, bei dem die Momentanleistungsberechnungseinrichtung (70) den berechneten Wert der Momentanleistung auf der Basis eines Istwerts oder eines Sollwerts der Ausgangsspannung der Wechselrichtereinrichtung (30) und eines Istwerts oder eines Sollwerts des Ausgangsstroms der Wechselrichtereinrichtung ausgibt.

3. System nach Anspruch 1, bei dem die Momentanleistungsberechnungseinrichtung (70) den berechneten Wert der Momentanleistung auf der Basis eines Istwerts oder eines Sollwerts der Ausgangsspannung der Wechselrichtereinrichtung (30) und eines Istwerts oder eines Sollwerts des Eingangsstroms der Wechselrichtereinrichtung ausgibt.

4. System nach Anspruch 1, bei dem die Momentanleistungsberechnungseinrichtung (70) den berechneten Wert der Momentanleistung auf der Basis eines Istwerts oder eines Sollwerts der Eingangsspannung der Wechselrichtereinrichtung (30) und eines Istwerts oder eines Sollwerts des Ausgangsstroms der Wechselrichtereinrichtung ausgibt.

5. System nach Anspruch 1, bei dem die Momentanleistungsberechnungseinrichtung (70) den berechneten Wert der Momentanleistung auf der Basis eines Istwerts oder eines Sollwerts der Eingangsspannung der Wechselrichtereinrichtung (30) und eines Istwerts oder eines Sollwerts des Eingangsstroms der Wechselrichtereinrichtung ausgibt.

6. System nach einem der Ansprüche 2 bis 5, bei dem die Stromrichtersteuereinrichtung (21, 23, 24) eine erste Einrichtung (21) zur Lieferung eines Momentanleistungswerts basierend auf einem Sollwert und einem Istwert, der an die Klemmen der Glättungseinrichtung (60) angelegten Gleichspannung; eine zweite Einrichtung zum Addieren des Momentanleistungswerts und des berechneten Werts der Momentanleistung; und eine dritte Einrichtung (23, 24) zur Steuerung der Stromrichtereinrichtung (20) basierend auf dem von der zweiten Einrichtung gelieferten Additionsergebnis und Istwerten der Eingangsspannung und des Eingangsstroms der Stromrichtereinrichtung umfaßt.

7. Verfahren zur Steuerung eines Spannungs-PBM-Stromrichter/Wechselrichtersystems, bei dem die Frequenz eines Eingangswechselstroms zur Ausgabe in eine andere Frequenz umgeformt werden kann und eine Anschlußspannung einer Glättungseinrichtung (60), die zwischen einen Stromrichter (20) und eine Wechselrichter (30) eingefügt ist, gemessen und zu einem Steuersystem des Stromrichters rückgekoppelt wird, wobei das Verfahren **gekennzeichnet** ist durch

   Berechnen einer Momentanleistung aus gemessenen elektrischen Werten, die zum Wechselrichter (30) gehören, und Rückkoppeln der berechneten Ausgabe als eines berechneten Werts der Momentanleistung zu dem Steuersystem des Stromrichters.

8. Verfahren nach Anspruch 7, bei dem der berechnete Wert der Momentanleistung auf der Basis eines Istwerts oder eines Sollwerts der Ausgangsspannung des Wechselrichters und eines Istwerts oder eines Sollwerts des Ausgangsstroms des Wechselrichters (30) berechnet wird.

9. Verfahren nach Anspruch 7, bei dem der berechnete Wert der Momentanleistung auf der Basis eines Istwerts oder eines Sollwerts der Ausgangsspannung des Wechselrichters und eines Istwerts oder eines Sollwerts des Eingangsstroms des Wechselrichters (30) berechnet wird.

10. Verfahren nach Anspruch 7, bei dem der berechnete Wert der Momentanleistung auf der Basis eines Istwerts oder eines Sollwerts der Eingangsspannung des Wechselrichters und eines Istwerts oder eines Sollwerts des Ausgangsstroms des Wechselrichters (30) berechnet wird.

11. Verfahren nach Anspruch 7, bei dem der berechnete Wert der Momentanleistung auf der Basis eines Istwerts oder eines Sollwerts der Eingangsspannung des Wechselrichters und eines Istwerts oder eines Sollwerts des Eingangsstroms des Wechselrichters (30) berechnet wird.

## Revendications

1. Un système de convertisseur/onduleur MIL du type tension, comprenant ;

   des moyens convertisseurs (20) pour convertirdela puissance alternative d'entrée en puissance continue;

   des moyens onduleurs (30) pour convertir la puissance continue en puissance alternative de sortie;

   des moyens de lissage (60) intercalés entre les moyens convertisseurs et les moyens onduleurs;

   des moyens de commande de convertisseur (24) pour effectuer une commande MIL de type tension des moyens convertisseurs (20), sur la base d'un ensemble de signaux d'entrée comprenant une valeur de consigne de convertisseur et une valeur détectée de la tension aux bornes des moyens de lissage (60); et

   des moyens de commande d'onduleur (34) pour effectuer une commande MIL de type tension des moyens onduleurs (30), sur la base d'une valeur de consigne d'onduleur et de la puissance alternative de sortie,

   caractérisé par

   des moyens de calcul de puissance instantanée (70) pour calculer, sur la base de valeurs électriques mesurées appartenant aux moyens inverseurs (39), une valeur calculée de puissance instantanée qui est appliquée aux moyens de commande de convertisseur (24) à titre de signal d'entrée supplémentaire.

2. Le système selon la revendication 1, dans lequel les moyens de calcul de puissance instantanée (70) émettent la valeur calculée de puissance instantanée sur la base d'une valeur détectée ou d'une valeur de consigne de la tension de sortie des moyens onduleurs (30), et d'une valeur détectée ou d'une valeur de consigne du courant de sortie des moyens onduleurs.

3. Le système selon la revendication 1, dans lequel les moyens de calcul de puissance instantanée (70) émettent la valeur calculée de puissance instantanée sur la base d'une valeur détectée ou d'une valeur de consigne de la tension de sortie des moyens onduleurs (30), et d'une valeur détectée ou d'une valeur de consigne du courant d'entrée des moyens onduleurs.

4. Le système selon la revendication 1, dans lequel les moyens de calcul de puissance instantanée (70) émettent la valeur calculée de puissance instantanée sur la base d'une valeur détectée ou d'une valeur de consigne de la tension d'entrée appliquée aux moyens onduleurs (30), et d'une valeur détectée ou d'une valeur de consigne du courant de sortie des moyens onduleurs.

5. Le système selon la revendication 1, dans lequel les moyens de calcul de puissance instantanée (70) émettent la valeur calculée de puissance instantanée sur la base d'une valeur détectée ou d'une valeur de consigne de la tension d'entrée des moyens onduleurs (30), et d'une valeur détectée ou d'une valeur de consigne du courant d'entrée des moyens onduleurs.

6. Le système selon l'une quelconque des revendications 2 à 5, dans lequel les moyens de commande de convertisseur (21, 23, 24) comprennent des premiers moyens (21) destinés à fournir une valeur de puissance instantanée, sur la base d'une valeur de consigne et d'une valeur détectée de la tension continue qui est appliquée aux bornes des moyens de lissage (60); des seconds moyens destinés à additionner la valeur de puissance instantanée et la valeur calculée de puissance instantanée; et des troisièmes moyens (23, 24) pour commander les moyens convertisseurs (20), sur la base du résultat d'addition qui est fourni par les seconds moyens, et des valeurs détectées de la tension d'entrée et du courant d'entrée des moyens convertisseurs.

7. Un procédé de commande d'un système de convertisseur/onduleur MIL du type tension, dans lequel la fréquence de la puissance alternative d'entrée peut être convertie en une fréquence différente pour être fournie en sortie, et une tension aux bornes de moyens de lissage (60) intercalés entre un convertisseur (20) et un onduleur (30) est détectée et elle est renvoyée vers un système de commande du convertisseur, le procédé étant caractérisé en ce que

on calcule une puissance instantanée à partir de valeurs électriques mesurées appartenant à l'onduleur (30), et on renvoit vers le système de commande du convertisseur l'information de sortie calculée, sous la forme d'une valeur calculée de puissance instantanée.

8. Le procédé selon la revendication 7, dans lequel la valeur calculée de puissance instantanée est calculée sur la base d'une valeur détectée ou d'une valeur de consigne de la tension de sortie de l'onduleur, et d'une valeur détectée ou d'une valeur de consigne du courant de sortie de l'onduleur (30).

9. Le procédé selon la revendication 7, dans lequel la valeur calculée de puissance instantanée est calculée sur la base d'une valeur détectée ou d'une valeur de consigne de la tension de sortie de l'onduleur, et d'une valeur détectée ou d'une valeur de consigne du courant d'entrée de l'onduleur (30).

10. Le procédé selon la revendication 7, dans lequel la valeur calculée de puissance instantanée est calculée sur la base d'une valeur détectée ou d'une valeur de consigne de la tension d'entrée de l'onduleur, et d'une valeur détectée ou d'une valeur de consigne du courant de sortie de l'onduleur (30).

11. Le procédé selon la revendication 7, dans lequel la valeur calculée de puissance instantanée est calculée sur la base d'une valeur détectée ou d'une valeur de consigne de la tension d'entrée de l'onduleur, et d'une valeur détectée ou d'une valeur de consigne du courant d'entrée de l'onduleur (30).

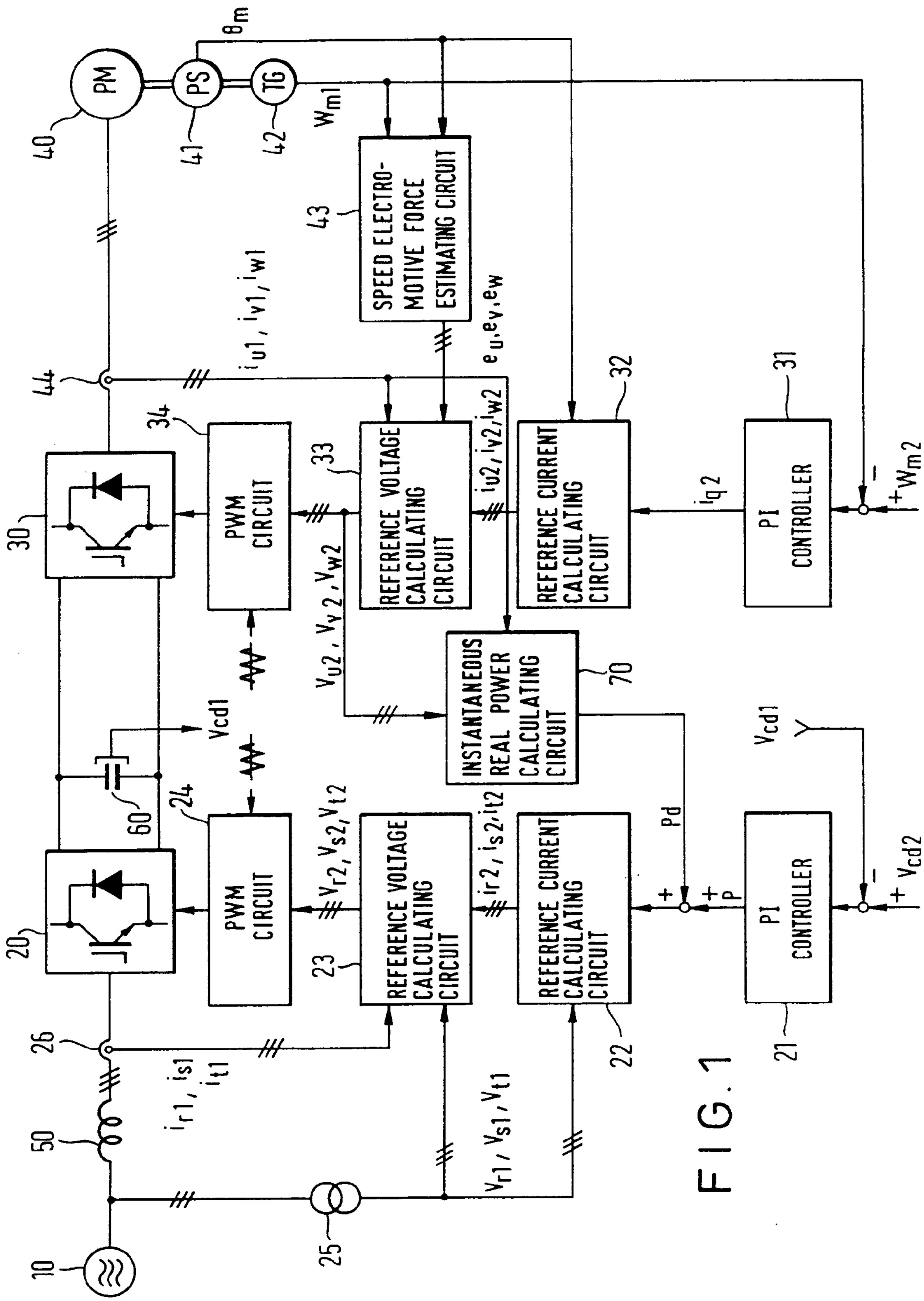

10
25
50
26
20
23
22
21
24
60
30
33
32
31
34
44
40
41
42
43
70
PM
PS
TG
$\theta_m$
$W_{m1}$
SPEED ELECTRO-MOTIVE FORCE ESTIMATING CIRCUIT
$e_u, e_v, e_w$
$i_{u1}, i_{v1}, i_{w1}$
PWM CIRCUIT
REFERENCE VOLTAGE CALCULATING CIRCUIT
REFERENCE CURRENT CALCULATING CIRCUIT
PI CONTROLLER
INSTANTANEOUS REAL POWER CALCULATING CIRCUIT
$i_{u2}, i_{v2}, i_{w2}$
$i_{q2}$
$V_{u2}, V_{v2}, V_{w2}$
$V_{cd1}$
$W_{m2}$
$P_d$
$P$
$V_{cd2}$
$V_{r2}, V_{s2}, V_{t2}$
$i_{r2}, i_{s2}, i_{t2}$
$i_{r1}, i_{s1}, i_{t1}$
$V_{r1}, V_{s1}, V_{t1}$


FIG. 1

FIG. 2

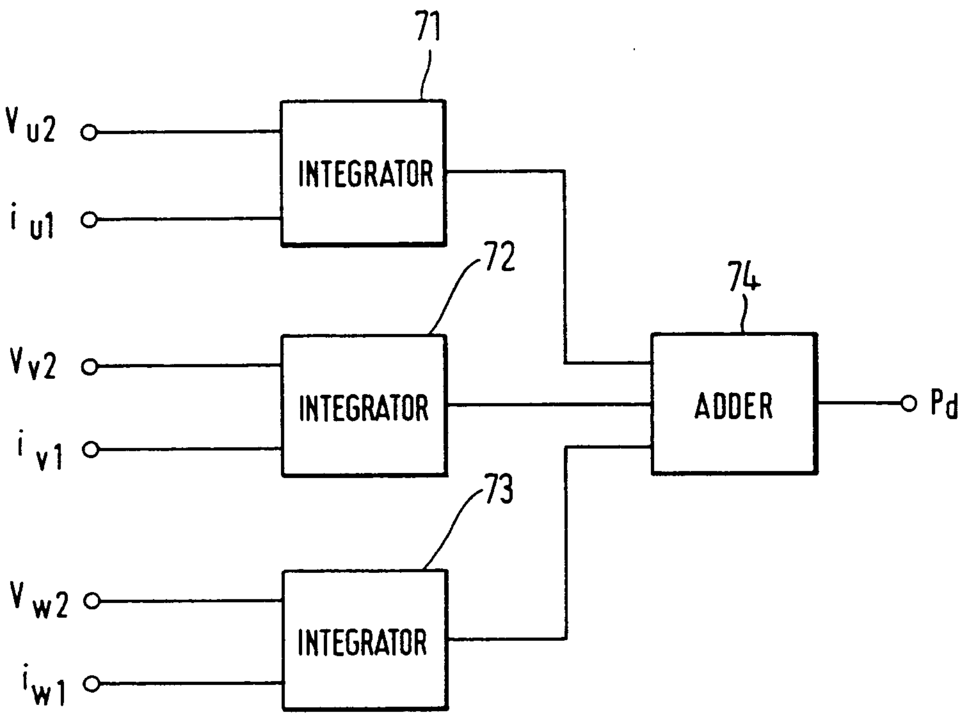
71
72
73
74
Vu2
iu1
Vv2
iv1
Vw2
iw1
INTEGRATOR
INTEGRATOR
INTEGRATOR
ADDER
Pd

FIG. 3

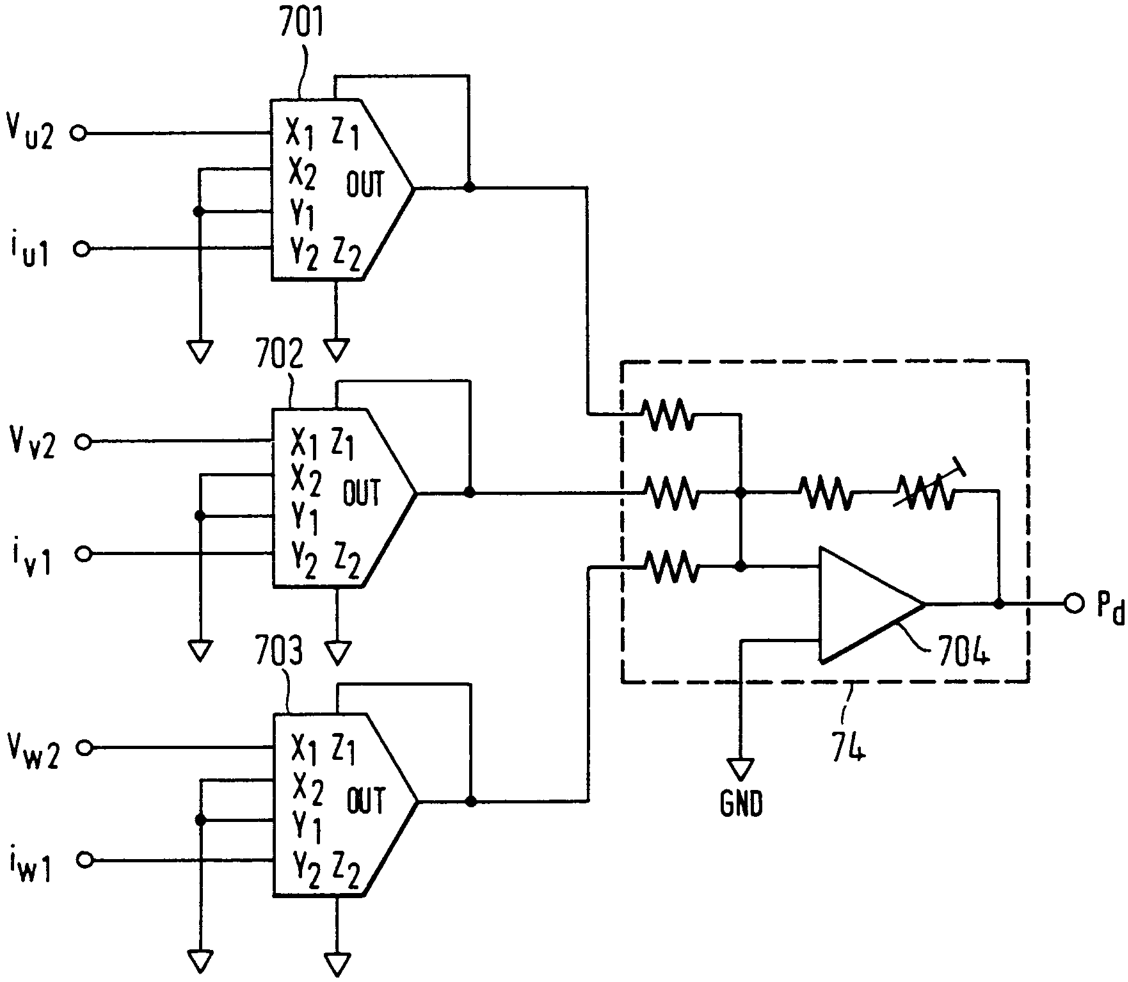
701
702
703
704
74
Vu2
iu1
Vv2
iv1
Vw2
iw1
X1
X2
Y1
Y2
Z1
Z2
OUT
GND
Pd

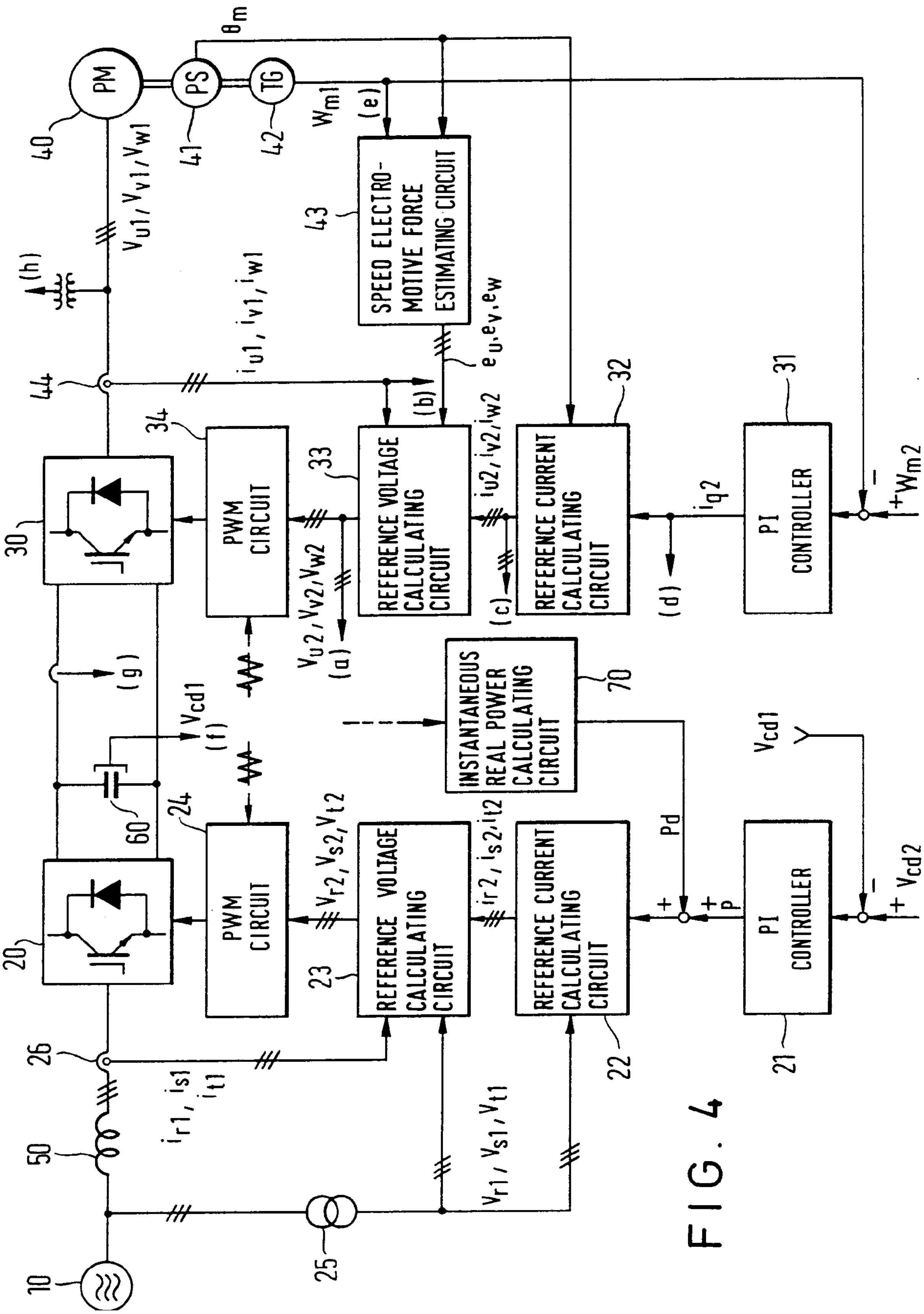

10
50
25
26
20
24
60
30
34
44
40
41
42
43
PM
PS
TG
$\theta_m$
$W_{m1}$
(e)
(h)
(g)
(f)
(a)
(b)
(c)
(d)
$V_{u1}, V_{v1}, V_{w1}$
$i_{u1}, i_{v1}, i_{w1}$
$i_{r1}, i_{s1}, i_{t1}$
$V_{r1}, V_{s1}, V_{t1}$
$V_{cd1}$
SPEED ELECTRO-MOTIVE FORCE ESTIMATING CIRCUIT
$e_u, e_v, e_w$
PWM CIRCUIT
REFERENCE VOLTAGE CALCULATING CIRCUIT
33
$V_{u2}, V_{v2}, V_{w2}$
REFERENCE CURRENT CALCULATING CIRCUIT
32
$i_{u2}, i_{v2}, i_{w2}$
$i_{q2}$
PI CONTROLLER
31
$W_{m2}$
INSTANTANEOUS REAL POWER CALCULATING CIRCUIT
70
Pd
P
23
$V_{r2}, V_{s2}, V_{t2}$
$i_{r2}, i_{s2}, i_{t2}$
22
21
$V_{cd2}$


FIG. 4

FIG. 5

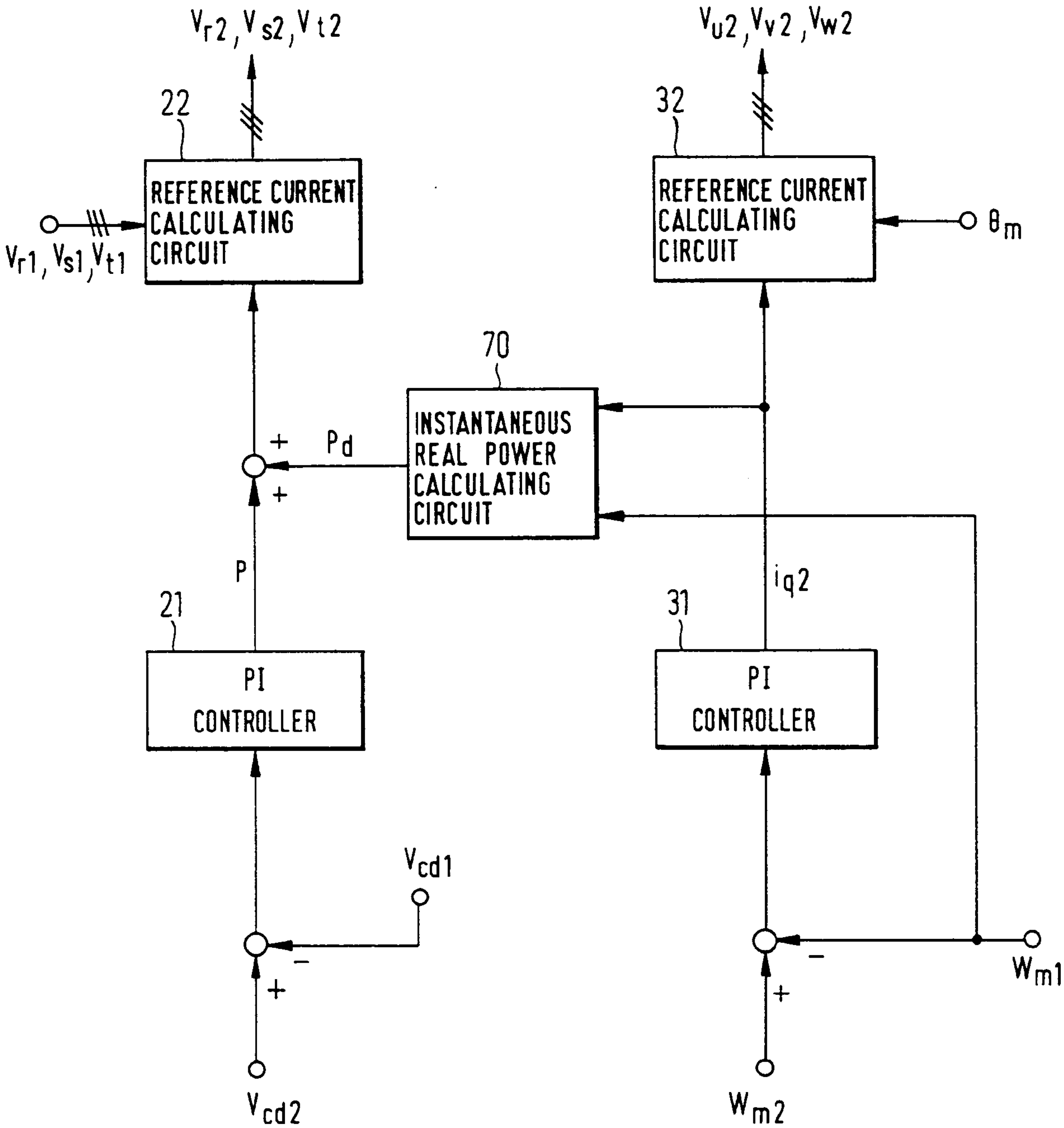
$V_{r2}, V_{s2}, V_{t2}$
22
REFERENCE CURRENT CALCULATING CIRCUIT
$V_{r1}, V_{s1}, V_{t1}$
$V_{u2}, V_{v2}, V_{w2}$
32
REFERENCE CURRENT CALCULATING CIRCUIT
$\theta_m$
70
INSTANTANEOUS REAL POWER CALCULATING CIRCUIT
$P_d$
+
+
P
21
PI CONTROLLER
$i_{q2}$
31
PI CONTROLLER
$V_{cd1}$
−
+
$V_{cd2}$
−
+
$W_{m1}$
$W_{m2}$

FIG. 6

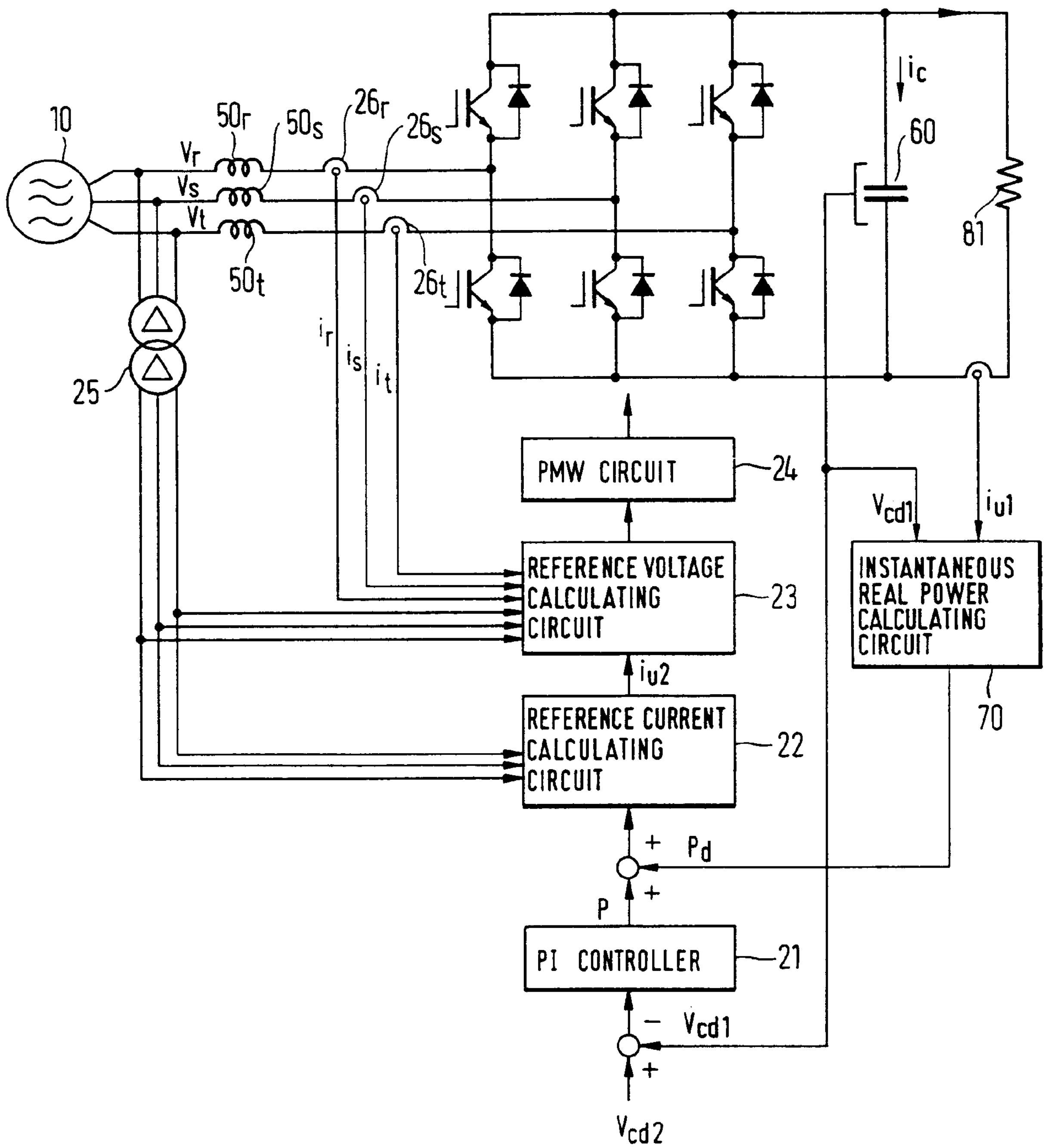
10
50r
50s
26r
26s
Vr
Vs
Vt
50t
26t
ic
60
81
25
ir
is
it
PMW CIRCUIT
24
Vcd1
iu1
REFERENCE VOLTAGE CALCULATING CIRCUIT
23
INSTANTANEOUS REAL POWER CALCULATING CIRCUIT
iu2
70
REFERENCE CURRENT CALCULATING CIRCUIT
22
+
Pd
+
P
PI CONTROLLER
21
−
Vcd1
+
Vcd2

FIG. 7

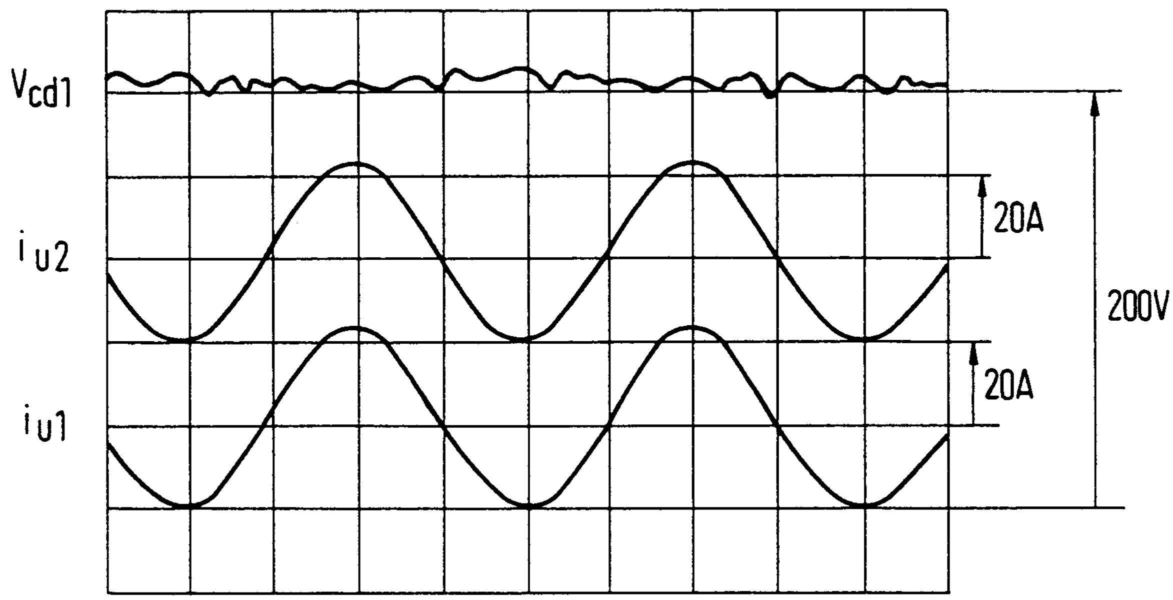


FIG. 8

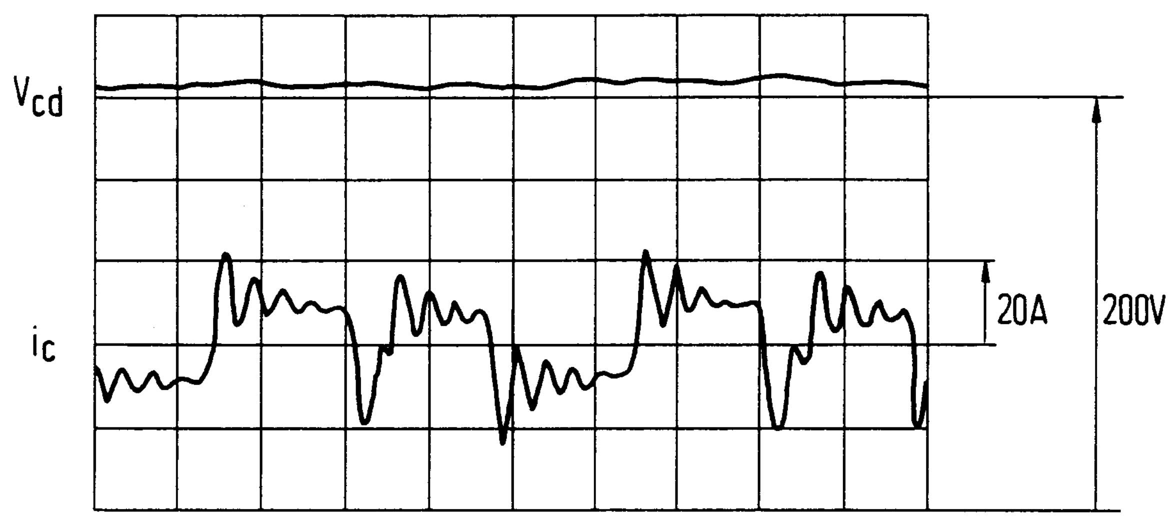

FIG. 9

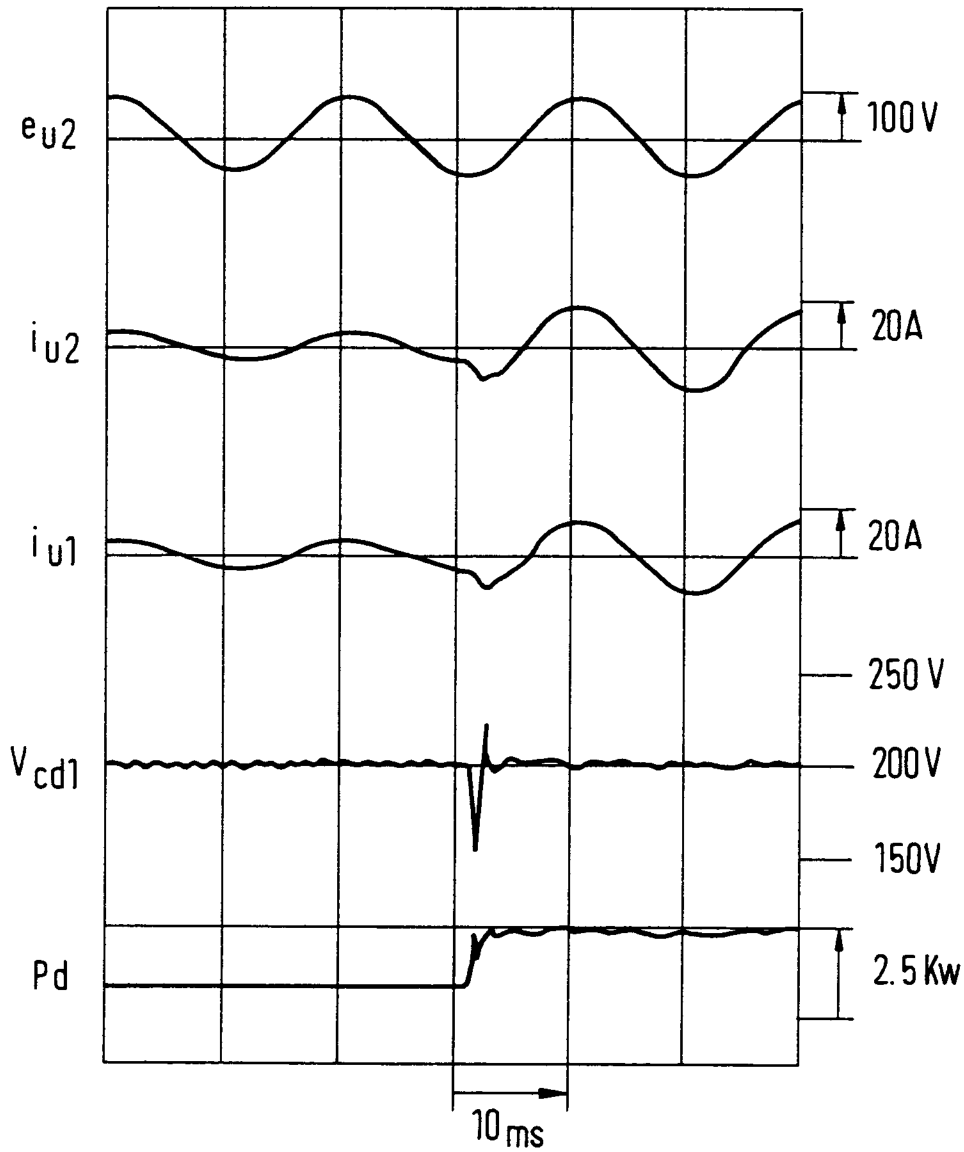

FIG. 10